(19) Europäisches Patentamt
European Patent Office
Office européen des brevets

(11) **EP 4 744 886 A1**

(12) **EUROPÄISCHE PATENTANMELDUNG**

(43) Veröffentlichungstag:
**20.05.2026   Patentblatt 2026/21**

(21) Anmeldenummer: **25216657.4**

(22) Anmeldetag: **18.11.2025**

(51) Internationale Patentklassifikation (IPC):
**B32B 7/027** (2019.01)   **B32B 1/08** (2006.01)
**B32B 3/02** (2006.01)   **B32B 7/12** (2006.01)
**B32B 27/08** (2006.01)   **B32B 27/32** (2006.01)

(52) Gemeinsame Patentklassifikation (CPC):
**B32B 7/027; B32B 1/08; B32B 3/02; B32B 7/12; B32B 27/08; B32B 27/32; B65D 77/2032;**
B32B 2250/242; B32B 2307/30; B32B 2307/31; B32B 2307/7376; B32B 2439/40; B32B 2439/70

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **19.11.2024   DE 102024133815**

(71) Anmelder: **Profol GmbH**
**83128 Halfing (DE)**

(72) Erfinder: **Altenweger, Josef**
**83026 Rosenheim (DE)**

(74) Vertreter: **Hoffmann Eitle**
**Patent- und Rechtsanwälte PartmbB**
**Arabellastraße 30**
**81925 München (DE)**

(54) **VERPACKUNG UMFASSEND EINE VERPACKUNGSGEFÄSS SOWIE EIN MEHRSCHICHTIGES VERSCHLUSSTEIL**

(57)    Verpackung umfassend ein Verpackungsgefäß sowie ein mehrschichtiges Verschlussteil mit wenigstens einer Trägerschicht und einer Haftschicht, wobei die Haftschicht des Verschlussteils auf einem Verschlusskragen des Verpackungsgefäßes anhaftet, wobei die Trägerschicht aus einem ersten polyolefinbasierten Kunststoff mit einer ersten Schmelztemperatur besteht, wobei die Haftschicht aus einem zweiten polyolefinbasierten Elastomer oder Plastomer mit einer zweiten Schmelztemperatur, welche niedriger ist als die erste Schmelztemperatur, und wobei das Verpackungsgefäß aus einem dritten polyolefinbasierten Kunststoff mit einer dritten Schmelztemperatur besteht, welche höher ist als die zweite Schmelztemperatur.

Fig. 1

EP 4 744 886 A1

**Beschreibung**

Technisches Gebiet

Die vorliegende Erfindung betrifft eine Verpackung umfassend eine Verpackungsgefäß sowie ein mehrschichtiges Verschlussteil in Form einer Folie. Die Folie kann mit einem Werkzeug unter Wirkung von Wärme und/oder Druck auf einen Verschlusskragen des Verpackungsgefäßes aufgebracht werden. In einer bevorzugten Ausführungsform wird eine Verpackung für Lebensmittel bereitgestellt, welche rückstandsfrei zu öffnen ist und/oder wiederverschließbar ist.

Technischer Hintergrund

Im Bereich der Verpackung von beispielsweise Lebensmitteln stellt sich häufig die Aufgabe, einen Zielgegenstand in Form eines Gefäßes (z.B. Becher, Eimer, Tonne, etc.) zu verschließen. Es ist bekannt, derartige Gefäße als Zielgegenstand mit einem bandförmigen Rand entlang der Öffnung zu versehen und auf diesen Rand zum Verschluss einen Deckel aus einer Folie aufzubringen. Dabei kann der Deckel aus verschiedenen Materialien bestehen und auch mit verschiedensten Verfahren aufgebracht werden. Als Verfahren bieten sich unter anderem ein Verkleben, ein Verpressen oder ein Verschweißen an. Die gewählten Materialien und Verfahren können dann jeweils bestimmte Vorteile bereitstellen, leiden aber häufig auch an entsprechenden Nachteilen, sodass die Auswahl an Materialien und Verfahren für einen bestimmten Verwendungs- und Einsatzzweck häufig beschränkt ist.

In neuerer Zeit stellen sich insbesondere bei der Verpackung von Konsumgütern (Lebensmittel, Medikamente, Kosmetika, Verbrauchsstoffe, etc.) auch zusätzliche Aufgaben: So ist beispielsweise häufig eine bestimmte Sortenreinheit der Verpackung insgesamt für eine ausreichende Recyclingfähigkeit notwendig. Dabei wird oft gefordert, dass sowohl das Gefäß (d.h. der Zielgegenstand in Form z.B. eines Bechers) als auch der Verschluss (Deckel) aus einem hinreichend ähnlichen oder sogar gleichen Material gefertigt sind, sodass bei Entsorgung ein einfaches Recycling möglich ist. Gleichwohl sind insbesondere im Bereich der Konsumgüter weitere Faktoren zu beachten. An dieser Stelle seien eine gute Bedruckbarkeit der Materialien, eine Einhaltung von Hygienevorschriften, und ein zufriedenstellendes Öffnungserlebnis durch den Benutzer genannt.

Dabei ist das letztgenannte insbesondere bei Lebensmitteln wichtig, da dem Benutzer, d.h. dem Konsumenten, ein sicheres Gefühl vermittelt werden soll, dass erstens das Gefäß vor dem Öffnen zuverlässig verschlossen war, und dass zweitens nach dem Öffnen das Gefäß keine Beschädigungen aufweist und auch dass der Verschluss zufriedenstellend geöffnet wurde. Hierbei kann es sich um ein vollständiges Ablösen des Deckels im Sinne einer rückstandsfreien Öffnung und/oder um eine gute und hinreichend zuverlässige Wiederverschließbarkeit handeln.

Bezüglich der Einhaltung der Hygiene-Standards und Vorschriften ist zu erwähnen, dass durch das Abfüllen und Verschließen einer Lebensmittelverpackung weder das Äußere der Verpackung mit Inhalt (d.h. dem Lebensmittel) oder das Werkzeug und die Geräte zur Verpackung mit dem Inhalt bzw. abzufüllenden Gut kontaminiert werden sollen. Beispielsweise hinterlassen Reste außerhalb an der Verpackung nicht nur einen unsauberen Eindruck, sondern können auch verderben und/oder andere Güter verschmutzen. Auch eine Kontamination der Abfüllanlage (inkl. Werkzeug(e), Halterungen, Transportmechanismen u.s.w.) selbst ist oft unerwünscht, insbesondere dann, wenn es sich bei dem abzufüllenden Gut um verderbliche Lebensmittel handelt.

Es besteht daher Bedarf an einer Technologie, die oben genannten Ziele bei der Aufbringung eines mehrschichtigen Verschlussteils in Form einer Folie auf ein Verpackungsgefäß, insbesondere im Zusammenhang einer Verpackung eines abzufüllenden Gutes, zu erreichen. Dabei sollen auch Wirtschaftlichkeit, Zuverlässigkeit und insgesamt eine zufriedenstellende Einhaltung aller anzuwendenden Standards berücksichtigt werden. Es ist daher insbesondere Aufgabe der vorliegenden Erfindung, eine Verpackung bereitzustellen, mit welcher sich ein oder mehrere der vorgenannten Ziele erreichen lassen.

Zusammenfassung

Die genannten Probleme und Aufgabenstellungen werden durch die Gegenstände des unabhängigen Patentanspruchs gelöst. Weitere vorteilhafte Ausgestaltungen der vorliegenden Erfindung sind in den abhängigen Patentansprüchen angegeben.

Gemäß einer Ausführungsform der vorliegenden Erfindung wird eine Verpackung umfassend ein Verpackungsgefäß sowie ein mehrschichtiges Verschlussteil mit wenigstens einer Trägerschicht und einer Haftschicht bereitgestellt, wobei die Haftschicht des Verschlussteils auf einem Verschlusskragen des Verpackungsgefäßes anhaftet, wobei die Trägerschicht aus einem ersten polyolefinbasierten Kunststoff mit einer ersten Schmelztemperatur besteht, wobei die Haftschicht aus einem zweiten polyolefinbasierten Elastomer oder Plastomer mit einer zweiten Schmelztemperatur, welche niedriger ist als die erste Schmelztemperatur, und wobei das Verpackungsgefäß aus einem dritten polyolefinbasierten Kunststoff mit einer dritten Schmelztemperatur besteht, welche höher ist als die zweite Schmelztemperatur.

Kurze Beschreibung der Figuren

Die Ausführungsformen der vorliegenden Erfindung werden insbesondere im Zusammenhang der folgenden Figuren erklärt und verdeutlicht. Dabei soll sich der Schutzumfang nicht auf diese Ausführungsform beschränken und die Figuren und die dazugehörige Beschreibung dienen demnach nur zur Verdeutlichung der allgemeinen Erfindungsgedanken. In den beigefügten Figuren zeigt/zeigen

die Figur 1      eine schematische Ansicht einer Verpackung mit einem Verpackungsgefäß und einem mehrschichtigen Verschlussteil gemäß einer Ausführungsform der vorliegenden Erfindung;

die Figur 2      eine schematische Schnittansicht eines mehrschichtigen Verschlussteils in Form einer Folie gemäß einer Ausführungsform der vorliegenden Erfindung;

die Figur 3      schematisch einen Messaufbau, mit welchem Öffnungskräfte reproduzierbar gemessen werden können; und

die Figur 4      eine schematische Schnittansicht eines mehrschichtigen Verschlussteils in Form einer Folie gemäß einer weiteren Ausführungsform der vorliegenden Erfindung.

Detaillierte Beschreibung

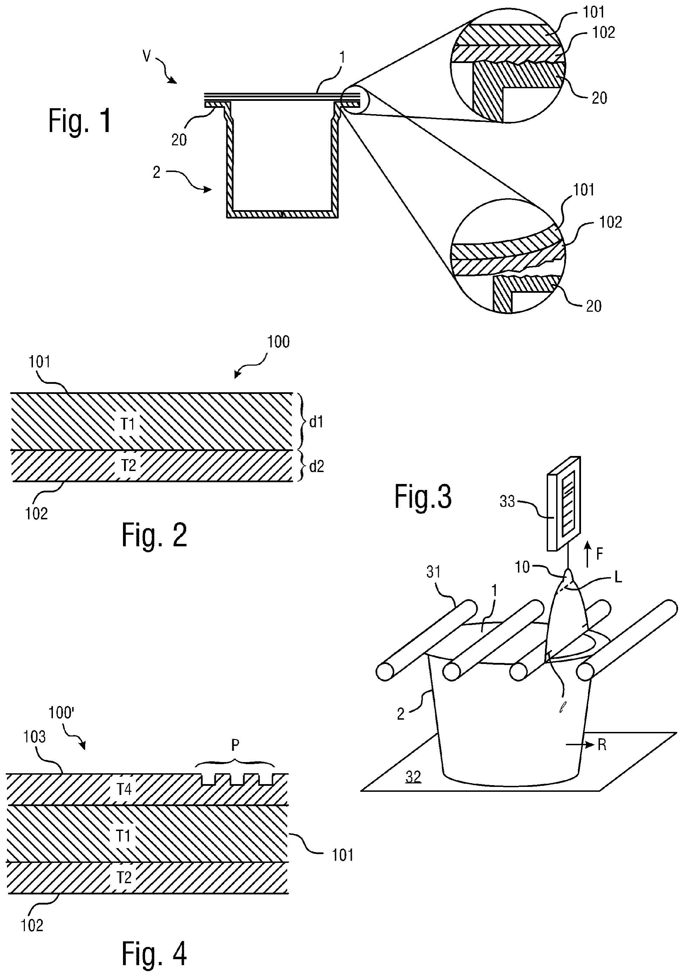

Die Figur 1 zeigt eine schematische Ansicht einer Verpackung mit einem Verpackungsgefäß und einem mehrschichtigen Verschlussteil gemäß einer Ausführungsform der vorliegenden Erfindung. Wie gezeigt, umfasst eine Verpackung V ein Verpackungsgefäß 2 sowie ein mehrschichtiges Verschlussteil 1 in Form einer Folie. Das Versschlussteil 1 und als Halbzeug die entsprechende Folie umfassen dabei wenigstens eine Trägerschicht 101 und eine Haftschicht 102, wobei die Haftschicht 102 des Verschlussteils 1 auf einem Verschlusskragen 20 des Verpackungsgefäßes 2 in einem verschlossenen oder zumindest teilweise verschlossenen Zustand der Verpackung V anhaftet. Die Trägerschicht 101 besteht dabei aus einem ersten polyolefinbasierten Kunststoff mit einer ersten Schmelztemperatur (T1) und die Haftschicht 102 besteht aus einem zweiten polyolefinbasierten Elastomer oder Plastomer mit einer zweiten Schmelztemperatur (T2). Die zweite Schmelztemperatur T2 ist dabei niedriger als die erste Schmelztemperatur T1. Des Weiteren besteht das Verpackungsgefäß 2 aus einem dritten polyolefinbasierten Kunststoff mit einer dritten Schmelztemperatur (T3), welche höher ist als die zweite Schmelztemperatur T2.

Die Figur 1 zeigt schematisch auch weitere Einzelheiten eines Zusammenspiels eines Formstücks einer Folie als das Verschlussteil 1 mit einem Zielgegenstand in Form des Verpackungsgefäßes. Ein Formstück aus einer Folie 100 bildet hier einen Deckel als das Verschlussteil 1 für einen Becher 2 als Verpackungsgefäß, wobei die Folie 100 des Deckels auf einen Verschlusskragen oder Rand 20 des Bechers 2 - als ein beispielhaftes Verpackungsgefäß - aufgebracht wurde. Dieser Verschlusskragen 20 kann ein ringförmiges Verschlussband bilden, in einem Sinne, dass dieses Band als Ringform einen vollständigen Verschluss der Bechereöffnung bildet und bandförmig im Sinne einer hinreichend breiten radialen Ausdehnung. Ein übliches ringförmiges Verschlussband hat einen Durchmesser von ca. 5 cm bis 15 cm und eine Breite von mehreren Millimetern. Damit bildet der gezeigte Becher 2 mit dem Deckel 1 eine Verpackung aus einem volumentragenden Gefäß und einer Folie. Das volumentragende Gefäß ist entlang eines Verschlussbandes, z. B. entlang des vorerwähnten Becherrandes, und darin zumindest in einem Teil mit einem adhäsiven Verbund verschlossen.

Dies zeigt insbesondere die obere vergrößerte Ansicht der Grenzfläche zwischen der Haftschicht 102 und der Oberfläche des Verpackungsgefäßes 2. Die Haftschicht 102 ist so verformt, dass deren Oberfläche der Oberflächenstruktur des Verschlusskragens 20 folgt, sodass ein ausreichend großer, vorzugsweise maximaler, Oberflächenkontakt bereitgestellt wird. Dies bildet einen adhäsiven Verbund, welcher einerseits einen hinreichenden Verschluss im Sinne einer Produktverpackung bereitstellt, welcher aber andererseits auch rückstandsfrei (siehe untere Vergrößerung) zu öffnen ist und/oder so formstabil verbleibt, dass die Verpackung zumindest teilweise wieder verschlossen werden kann.

Diese vorteilhafte Bindung - und damit der Verschluss der Verpackung - wird insbesondere dadurch erzielt, dass die erste Schmelztemperatur T1 höher ist als die zweite Schmelztemperatur T2, und auch die dritte Schmelztemperatur T3 höher ist als die zweite Schmelztemperatur T2. Es gilt:

$$T1 > T2 < T3;$$

Dadurch kann die Haftschicht 102 so weit erwärmt werden, dass sie erweicht oder teilweise aufschmilzt, ohne dass weder die Trägerschicht 102 noch der Verschlusskragen 20 des Verpackungsgefäßes wesentlich erweichen und verformen oder gar aufschmelzen. Ein Verschweißen und eine damit schlecht ablösbare und wiederverschließbare Bindung zwischen dem Verschlussteil 1 und dem Verpackungsgefäß 2 wird damit wirksam verhindert. Des Weiteren wird auch eine gleichzeitige Verformung der Haftschicht 101 und der Oberfläche des Verschlusskragens verhindert, was auch ohne Verschweißen zu einer zu starken Bindung führen würde.

Vorzugsweise wird eine Verpackung bereitgestellt, wobei die Materialsysteme der Trägerschicht, der Haftschicht und des Verpackungsgefäßes auf einem Polypropylen-System beruhen. In einer bevorzugten Ausführungsform sind die Schichten der Folie 100, bspw. die Elastomere, Plastomere und/oder Terpolymere der Schichten 101 und 102 alle Polypropylen-basiert, d. h.

das Basispolymer der Materialien dieser Schichten ist Polypropylen. Alternativ können die Materialsysteme der Trägerschicht, der Haftschicht und des Gefäßes auch auf einem Polyethylen-System beruhen. Der Zielgegenstand, bzw. das volumentragende Gefäß 2 ist dann dabei auch aus einem polyolefinbasierten Kunststoff gefertigt, was nicht nur den adhäsiven Verbund in vorteilhafter Weise fördert, wenn wenigstens in einem Bereich des Verschlussbandes ein Oberflächenkontakt zwischen der Folie und dem polyolefinbasierten Kunststoff des Gefäßes maximal ist. Diese Ausführungsformen stellen aber auch eine sortenreine Verpackung bereit, was insbesondere aus Gesichtspunkten der Wiederverwendung, des Recycelns und der Nachhaltigkeit von wesentlicher und vorteilhafter Bedeutung ist. Vorzugsweise sind die Materialsysteme der Folie und das des volumentragenden Gefäßes so aufeinander abgestimmt, dass eines nur bis zu 5% nach Gewichtsanteil eines Fremdstoffes gegenüber dem anderen aufweist. Damit ist eine besonders günstige Sortenreinheit gegeben und die Verpackung kann als ganzes - oder Gefäß und Deckel zusammen - der Entsorgung zugeführt werden.

Die Figur 2 zeigt eine schematische Schnittansicht eines mehrschichtigen Verschlussteils in Form einer Folie gemäß einer Ausführungsform der vorliegenden Erfindung. Demgemäß ist eine Folie 100 zur Bildung einer Verpackung gezeigt, welche auf einen Zielgegenstand aufgebracht werden kann, z. B. mit einem Werkzeug unter Wirkung von Wärme, Druck, und/oder Ultraschall auf den Zielgegenstand in Form eines Verpackungsgefäßes. In bevorzugten Ausführungsformen dient die Folie dazu, eine Verpackung für Lebensmittel zu bilden, so bspw. zusammen mit einem Becher eine Verpackung für ein Molkereiprodukt, (z. B. Joghurtbecher), ein Molkereiersatzprodukt, Wurst- oder Fleischwaren, Fertiggerichte, Tiernahrung und dergleichen. Die Folie 100 zum Aufbringen auf einen Zielgegenstand und umfasst dabei wenigstens eine Trägerschicht 101 und eine Haftschicht 102, wobei die Trägerschicht 101 aus einem ersten polyolefinbasierten Kunststoff mit einer ersten Schmelztemperatur T1 besteht und wobei die Haftschicht 102 aus einem zweiten polyolefinbasierten Elastomer oder Plastomer mit einer zweiten Schmelztemperatur T2 besteht. Die zweite Schmelztemperatur T2 ist dabei niedriger als die erste Schmelztemperatur T1. Es gilt also T1 > T2. Unter polyolefinbasierten Kunststoffen sind dabei bspw. Polypropylen (PP) oder Polyethylen (PE) zu verstehen. Die Haftschicht 102 kann insbesondere ein Elastomer und/oder ein Plastomer aufweisen oder aus einem dieser Materialen oder einer entsprechenden Kombination bestehen. Zusätzlich zu den Elastomeren und/oder Plastomeren kann die Haftschicht 102 zur Verringerung der Klebneigung zusätzlich ein Terpolymer aufweisen, d.h. damit kann eine Verklebung verhindert werden und die Haftung auf dem Zielgegenstand durch Adhäsion verwirklicht werden, um so die genannten Vorteile zu erzielen.

Die Haftschicht 102 ist aufschmelzbar, teilweise aufschmelzbar oder zumindest in Grenzen verformbar. Die erfindungsgemäße Konfiguration ermöglicht insbesondere eine Aufbringung der Folie 100 auf einen Zielgegenstand mit der Seite der Haftschicht 102. Diese Haftschicht 102 ist damit nicht mehr uneingeschränkt zugänglich, da sie von dem Zielgegenstand bzw. dem Verschlusskragen des Verpackungsgefäßes abgedeckt wird. Die erfindungsgemäße Lösung erlaubt jedoch einen ausreichenden Wärmeeintrag durch die - sozusagen - obere Trägerschicht 101, da deren Schmelztemperatur T1 größer ist als die Schmelztemperatur T2 der Haftschicht 102. Die Haftschicht 102 kann daher in einem Zustand, in welchem sie bereist auf dem Zielgegenstand aufliegt, soweit erhitzt werden, dass diese aufschmilzt, teilweise aufschmilzt oder zumindest verformbar wird, wobei letztere Verformbarkeit eine größere Verformbarkeit bei einer Temperatur unter Wärmeeintrag gegenüber einer Verformbarkeit bei Raum- bzw. Gebrauchs- oder Lagertemperatur bezeichnet.

Die hier genannte Verformbarkeit bezeichnet dabei nicht notwendigerweise eine makroskopische, mit dem Auge erkennbare Verformung, sondern eine mikroskopisch betrachtete Anpassung der Folie an die Rauigkeit des Zielgegenstandes (z. B. an die Kontaktfläche des Verschlusskragens) unter Bildung einer Adhäsion und des entsprechenden Verschlusses. Durch die höhere Schmelztemperatur T1 kann die Trägerschicht 101 die Haftschicht 102 auch in einem verformbaren Zustand zuverlässig halten und ermöglicht so überhaupt erst eine zuverlässige und praxistaugliche Verarbeitung. Da die Schmelztemperatur T3 auch höher ist als die zweite Schmelztemperatur, bleibt die mikroskopische Oberfläche des Verschlusskragens hinreichend stabil, sodass eine einseitige Oberflächen- und Grenzflächenanpassung unter Bildung der vorteilhaften Adhäsionsbindung erfolgen kann.

Durch die Verformbarkeit kann insbesondere in einer reproduzierbaren Art und Weise ein adhäsiver Verbund mit den entsprechenden Oberflächen des Zielgegenstandes eingegangen werden. Dies ist insbesondere von einem Verschweißen oder Verkleben abzugrenzen, welche zwar nicht notwendigerweise eine optimale Oberflächenanpassung der zu verbindenden Teile erfordert, jedoch in der Regel eine zu starke Verbindung bildet. Insbesondere können die notwendigen Kräfte zur Lösung eines Klebeverbundes oder einer Verschweißung größer sein, als die Kräfte, die ausreichen, um einen inneren Verbund des Schichtaufbaus der verwendeten Verpackungsfolien zu lösen. Aus diesem Grund, "zerreist" eine solche Verpackung oft beim Öffnen, was Verpackungsreste in Form von Fetzen oder Fäden auf der Lebensmittelverpackung zurücklässt. Dies wird oft als sehr nachteilig empfunden, da Konsumenten eine Kontamination des Lebensmittels mit den Verpackungsresten befürchten.

Gemäß entsprechender Ausführungsformen der vorliegenden Erfindung liegt eine erste Lösekraft zum initialen Lösen des mehrschichtigen Verschlussteils von dem Verschlusskragen des Verpackungsgefäßes in einem Bereich von 10 N bis 20 N liegt, und vorzugsweise liegt eine zweite Lösekraft zum weiteren Lösen in einem Bereich von 1 N bis 5 N. Das initiale Lösen bezeichnet dabei den Vorgang, bei welchem mit dem Öffnen des mehrschichtigen Verschlussteils ausgehend von einem vollständigen verschlossenen Zustand begonnen wird. Das initiale Lösen kann dabei bis zu einem Zustand reichen, indem das Verpackungsgut erstmals zugänglich wird. Diese erste Lösekraft ist in der Regel größer als andere Kräfte, welche während des Öffnens in Betracht kommen, da eine Öffnungslinie anfänglich größer sein kann, als zu späteren Zeitpunkten des Öffnungsvorgangs.

Die Figur 3 zeigt schematisch einen Messaufbau, mit welchem solche Öffnungskräfte reproduzierbar gemessen werden können.

Eine beispielhafte Messvorrichtung ist auch im Internet archiviert und zugänglich über https://web.archive.org/web/20240430080932/https://www.zwick roell.com/fileadmin/content/Files/Share-Point/user_upload/PI_ DE/10_611_Deckel_Abziehvor richtung_fuer_peelbare_Verpackunge n_PI_DE.pdf

Die Messvorrichtung umfasst dabei einen Satz Rollen 31 unter denen ein Prüfling (d.h. eine erfindungsgemäße verschlossene Verpackung V) auf einem Schlitten 32 niedergehalten werden kann. Eine Kraft F wird bspw. auf eine Öffnungslasche 10 des mehrschichtigen Verschlussteils 1 mit einem Kraftmesser 33 vertikal nach oben ausgeübt, sodass die Lösekraft gemessen werden kann, während die Verpackung geöffnet wird, der Deckel (Verschlussteil) nach oben abgezogen wird und die Verpackung entsprechend auf dem Schlitten 32 verfährt (hier nach rechts [R]). Anfänglich öffnet die Verpackung entlang einer relativ langen Öffnungslinie, während diese sich später zu relativ kleinen Öffnungslinien verkleinert, was der Geometrie des ringförmigen Verschlussbandes geschuldet ist. In der Figur sind gezeigte Öffnungslinien als gedachte Linien L und $\ell$ eingezeichnet, welche den entsprechenden Linien am jeweiligen Öffnungszeitpunkt entsprechen. Gemäß der Ausführungsformen der vorliegenden Erfindung liegt die Lösekraft während des gesamten Öffnungsvorgangs in den vorgenannten Bereichen und immer unterhalb der Kraft, welche zu einer Ablösung der Haftschicht 102 von der Trägerschicht 101 oder zu einem Zerreißen bzw. Bruch der Folie 100 führt.

Allgemein bildet eine erfindungsgemäße Folie eine Verpackung, welche rückstandsfrei zu öffnen ist. Ähnliche Überlegungen gelten für eine Wiederverschließbarkeit, welche schon alleine durch einen Bruch der Verpackungsteile beim Öffnen oft verunmöglicht wird. Demgegenüber kann eine erfindungsgemäße Folie eine Verpackung bilden, welche beim Ablösen (vom Zielgegenstand in bspw. Form eines Bechers) nicht reißt oder bricht und daher formstabil bleibt. Diese Formstabilität kann wesentlich dafür sein, dass die Verbindungsfläche erneut für einen adhäsiven - wenn auch nicht so starken - Verbund bereitsteht, wenn die Verpackung wieder verschlossen werden soll.

Vorzugsweise weist die Trägerschicht 101 eine erste Schichtdicke d1 auf und die Haftschicht 102 weist eine zweite Schichtdicke d2 auf. Die erste Schichtdicke d1 und die zweite Schichtdicke d2 sind so aufeinander abgestimmt, dass ein Wärmeeintrag durch die Trägerschicht 101 eine Verformung der Haftschicht 102 unter Bildung eines adhäsiven Verbunds mit zumindest einer Teilfläche des Zielgegenstandes eingeht. Diese vorteilhafte Kombination von Schichtdicken und Schmelztemperaturen ermöglichen insbesondere einen sehr zuverlässigen und auf den Zielgegenstand angepasste Verarbeitung. Die erste Schichtdicke d1 kann dabei in einem Bereich von 10 $\mu$m bis 600 $\mu$m liegen und die zweite Schichtdicke d2 kann in einem Bereich von 5 $\mu$m bis 30 $\mu$m liegen. Alternativ oder zusätzlich kann auch ein Verhältnis der ersten Schichtdicke d1 zur zweiten Schichtdicke d2 entsprechen eingestellt werden und bspw. in einem Bereich 1:1 bis 20:1 liegen. Die Trägerschicht 101 ist damit vorzugsweise dicker als die Haftschicht 102.

Generell kann ein zum Aufbringen notwendiger Wärmeeintrag durch die Trägerschicht 101 und die zweite Schmelztemperatur T2 so eingestellt werden, dass die Haftschicht 102 unter Bildung eines erhöhten Oberflächenkontakts mit zumindest einer Teilfläche des Zielgegenstandes verformt. Hierbei kann die Haftschicht 102 zumindest teilweise auf- oder anschmelzen. Die Temperatur kann dabei nahe oder oberhalb der zweiten Schmelztemperatur T2 liegen. Die Eigenschaften der Trägerschicht 101 und Haftschicht 102, insbesondere die Schmelztemperatur T2, bestimmen somit, ob es einen Wärmeeintrag im Sinne eines zeitlichen Temperatur- und Leistungsprofil gibt, durch welches ein adhäsiver Verbund mit dem Zielgegenstand erzielt wird. Der Oberflächenkontakt kann dabei maximal erhöht werde, sodass der Kontakt der Oberflächen der Haftschicht 102 und der des Zielgegenstandes vollständig ist, d.h. insbesondere die Form der Oberfläche der Haftschicht 102 in einem aufgebrachten Zustand der Form des Zielgegenstandes innerhalb des Verschlussbereichs (z. b. ein ringförmiges Band entlang eines Becherrandes) folgt.

Vorzugsweise liegt die erste Schmelztemperatur T1 der Trägerschicht 101 in einem Bereich von 100 °C bis 160 °C und die zweite Schmelztemperatur T2 der Haftschicht 102 liegt in einem Bereich von 40 °C bis 90°C. Weiterhin vorzugsweise liegt die dritte Schmelztemperatur T3 des Verpackungsgefäßes oder des Materials des Verschlusskragens in einem Bereich von 150 °C bis 165 °C. Generell kann die erste Schmelztemperatur T1 mindestens um 10°, vorzugsweise mindestens um 20°, höher als die zweite Schmelztemperatur T2. Damit ist bei den in Rede stehenden Materialsystemen eine gute Verformbarkeit der Haftschicht 102 bei gleichzeitiger Formstabilität der Trägerschicht 101 erzielbar. Dies trifft insbesondere auf die Materialsysteme der Haftschicht 102 auf Grundlage von Polypropylen und/oder Polyethylen zu.

Die Figur 4 zeigt eine schematische Schnittansicht eines mehrschichtigen Verschlussteils in Form einer Folie gemäß einer weiteren Ausführungsform der vorliegenden Erfindung. Demgemäß umfasst eine Folie 100' wieder die Schichten 101 und 102 wie vorhergehend beschrieben. In dieser Ausführungsform umfasst die Folie 100' eine zusätzliche Schicht 103 auf der Trägerschicht 101. Vorzugsweise besteht auch die zusätzliche Schicht 103 aus einem polyolefinbasierten Kunststoff, welcher in der Rezeptur bzw. Zusammensetzung von den Schichten 101 und 102 abweicht. Weiterhin kann auch die Schmelztemperatur T4 des polyolefinbasierten Kunststoffes der zusätzlichen Schicht 103 größer sein als zumindest die zweite Schmelztemperatur T2, sodass ein Wärmeeintrag zur Verformung und Adhäsionsbildung der Haftschicht 102 auch durch die Trägerschicht 101 und die zusätzliche Schicht 103 möglich ist. Durch das Vorsehen der zusätzlichen Schicht 103 kann insbesondere die Prozessfähigkeit des Folien-Extrusionsprozesses und die Bedruckbarkeit der Folie mit verbessert werden kann. Optional kann die zusätzliche Schicht 103 eine Prägung P aufweisen.

Allgemein können die Kunststofffolien gemäß der geschilderten Ausführungsformen die bisher eingesetzten Lids aus Aluminium ersetzen. Im Falle eines PP-Bechers kann diese Folie dann zusammen mit dem Becher recyclingfähig sein. Die Haftschicht kann eine Peelschicht bereitstellen, welche aus niedrigsiegelnden, d. h. bei relativ niedrigen Temperaturen aufschmelzendem Polyolefin-Elastomer oder Plastomer bestehen. Besonders vorteilhaft kann beim Versiegeln/Verschließen von bspw. Bechern aus Polypropylen ein Material aus einem Metallocen-katalysierten Polypropylen mit verschiedenen Anteilen an Ethylenen Einsatz finden. Hier kann dann bspw. eine besonders vorteilhafte volle Recyclingfähigkeit von PP Becher und Lid bereitgestellt werden. Ein weiterer Vorteil beim Einsatz der geschilderten Schichten besteht darin, dass sich die Peelkräfte (Ablösekräfte) individuell über die Zeit, die Temperatur und den Druck während des Aufbringens individuell einstellen lassen, d. h. es können sowohl relativ lose verschlossene Verpackungen als auch relativ fest verschlossene Verpackungen bereitgestellt werden. So kann bspw. ein Joghurtbecher einfach von Kinderhand geöffnet werden, wobei bspw. Tiernahrung höhere Kräfte zum Öffnen erfordern können.

Ein weiterer Vorteil der geschilderten Folien kann in der niedrigen Siegeltemperatur gesehen werden. D. h. die Folie kann bei relativ niedrigen Temperaturen (im Vergleich zu herkömmlichen Technologien) auf einen Zielgegenstand aufgebracht werden. Der Temperaturbereich kann dabei auch unterhalb eines Bereichs liegen, in dem Druckfarben von direkt bedruckten Lids brechen bzw. zerstört werden. Ein weiterer Vorteil kann ferner darin gesehen werden, dass Maßabweichungen des Siegelwerkzeuges zum Becher durch die flexible Haftschicht ausgeglichen werden können und über die Siegelfläche entlang eines Verschlussbandes eine gleichmäßige Peelabzugskraft beim Öffnen gegeben ist.

Obwohl nun detaillierte Ausführungsformen der Erfindung beschrieben wurden, sollten diese lediglich zum besseren Verständnis der Erfindung und ihrer Wirkungen dienen. Der Schutzumfang ist durch die folgenden Patentansprüche definiert und soll nicht durch die detaillierte Beschreibung eingeschränkt werden.

## Patentansprüche

1. Verpackung umfassend ein Verpackungsgefäß sowie ein mehrschichtiges Verschlussteil mit wenigstens einer Trägerschicht und einer Haftschicht, wobei die Haftschicht des Verschlussteils auf einem Verschlusskragen des Verpackungsgefäßes anhaftet, wobei die Trägerschicht aus einem ersten polyolefinbasierten Kunststoff mit einer ersten Schmelztemperatur besteht, wobei die Haftschicht aus einem zweiten polyolefinbasierten Elastomer oder Plastomer mit einer zweiten Schmelztemperatur, welche niedriger ist als die erste Schmelztemperatur, und wobei das Verpackungsgefäß aus einem dritten polyolefinbasierten Kunststoff mit einer dritten Schmelztemperatur besteht, welche höher ist als die zweite Schmelztemperatur.

2. Verpackung gemäß Anspruch 1, wobei die Trägerschicht eine erste Schichtdicke aufweist und die Haftschicht eine zweite Schichtdicke aufweist, und wobei die erste Schichtdicke und die zweite Schichtdicke so aufeinander abgestimmt sind, dass die Haftschicht durch einen Wärmeeintrag durch die Trägerschicht einen adhäsiven Verbund mit dem Verschlusskragen des Verpackungsgefäßes bildet.

3. Verpackung gemäß Anspruch 2, wobei der Wärmeeintrag durch die Trägerschicht und die zweite Schmelztemperatur so eingestellt sind, dass die Haftschicht unter Bildung eines erhöhten Oberflächenkontakts mit zumindest einer Teilfläche des Verschlusskragen des Verpackungsgefäßes verformt.

4. Verpackung gemäß einem der Ansprüche 1 bis 3, wobei die erste Schichtdicke in einem Bereich von 10 μm bis 600 μm liegt und die zweite Schichtdicke in einem Bereich von 5 μm bis 30 μm liegt und/oder ein Verhältnis der ersten Schichtdicke zur zweiten Schichtdicke in einem Bereich von 1:1 bis 20:1 liegt.

5. Verpackung gemäß einem der Ansprüche 1 bis 4, wobei die erste Schmelztemperatur in einem Bereich von 100°C bis 160°C liegt, die zweite Schmelztemperatur in einem Bereich von 40°C bis 100°C liegt, und die erste Schmelztemperatur mindestens um 10°, vorzugsweise mindestens um 20°, höher ist, als die zweite Schmelztemperatur.

**6.** Verpackung gemäß einem der Ansprüche 1 bis 5, wobei die dritte Schmelztemperatur in einem Bereich von 150°C bis 165°C liegt, und die dritte Schmelztemperatur mindestens um 10°, vorzugsweise mindestens um 20°, höher ist, als die zweite Schmelztemperatur.

**7.** Verpackung gemäß einem der Ansprüche 1 bis 6, wobei eine erste Lösekraft zum initialen Lösen des mehrschichtigen Verschlussteils von dem Verschlusskragen des Verpackungsgefäßes in einem Bereich von 10 N bis 20 N liegt, und vorzugsweise eine zweite Lösekraft zum weiteren Lösen in einem Bereich von 1 N bis 5 N liegt.

**8.** Verpackung gemäß einem der Ansprüche 1 bis 7, wobei ein Materialsystem der Haftschicht, der Trägerschicht und des Verpackungsgefäßes auf Polypropylen und/oder Polyethylen beruht.

**9.** Verpackung gemäß einem der Ansprüche 1 bis 8, wobei das mehrschichtige Verschlussteil eine zusätzliche Schicht auf der Trägerschicht umfasst.

**10.** Verpackung nach einem der Ansprüche 1 bis 9, wobei wenigstens in einem Bereich des Verschlusskragens ein Oberflächenkontakt zwischen dem mehrschichtigen Verschlussteil und dem Verschlusskragen maximal ist.

## Fig. 1

## Fig. 2

## Fig.3

## Fig. 4

Europäisches
Patentamt
European
Patent Office
Office européen
des brevets

## EUROPÄISCHER RECHERCHENBERICHT

Nummer der Anmeldung

EP 25 21 6657

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP 2007 022589 A (IDEMITSU UNITECH CO LTD) 1. Februar 2007 (2007-02-01) * Ansprüche 1, 5, 6 * * Abbildungen 1, 2 * * Absätze [0024] - [0030] * ----- | 1-10 | INV. B32B7/027 B32B1/08 B32B3/02 B32B7/12 B32B27/08 |
| Y | CN 101 209 765 A (IDEMITSU UNITECH CO LTD [JP]) 2. Juli 2008 (2008-07-02) * Ansprüche 1, 3 * * Abbildungen 1, 2 * * Seite 6 - Seite 10 * ----- | 1-10 | B32B27/32 |
| Y | US 2010/323134 A1 (BOSTIAN DAVID HOYT [US] ET AL) 23. Dezember 2010 (2010-12-23) * Absätze [0029] - [0033], [0084] - [0089] * ----- | 1-10 | |
| A | DE 10 2018 215927 A1 (PROFOL GMBH [DE]) 19. März 2020 (2020-03-19) * Anspruch 1 * * Abbildungen 2B, 2C * ----- | 1-10 | |

RECHERCHIERTE SACHGEBIETE (IPC)

B32B
B65D

Der vorliegende Recherchenbericht wurde für alle Patentansprüche erstellt

| Recherchenort | Abschlußdatum der Recherche | Prüfer |
|---|---|---|
| Den Haag | 11. März 2026 | Nowak, René |

## ANHANG ZUM EUROPÄISCHEN RECHERCHENBERICHT
## ÜBER DIE EUROPÄISCHE PATENTANMELDUNG NR.

EP 25 21 6657

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2026

| Im Recherchenbericht angeführtes Patentdokument | Datum der Veröffentlichung | Mitglied(er) der Patentfamilie | | Datum der Veröffentlichung |
|---|---|---|---|---|
| JP 2007022589 A | 01-02-2007 | JP | 4733452 B2 | 27-07-2011 |
| | | JP | 2007022589 A | 01-02-2007 |
| CN 101209765 A | 02-07-2008 | CN | 101209765 A | 02-07-2008 |
| | | JP | 2008179410 A | 07-08-2008 |
| | | KR | 20080063164 A | 03-07-2008 |
| | | TW | 200844012 A | 16-11-2008 |
| US 2010323134 A1 | 23-12-2010 | KEINE | | |
| DE 102018215927 A1 | 19-03-2020 | DE | 102018215927 A1 | 19-03-2020 |
| | | EP | 3853021 A1 | 28-07-2021 |
| | | US | 2021348034 A1 | 11-11-2021 |
| | | WO | 2020058398 A1 | 26-03-2020 |

EPO FORM P0461

Für nähere Einzelheiten zu diesem Anhang : siehe Amtsblatt des Europäischen Patentamts, Nr.12/82